# EUROPÄISCHE PATENTSCHRIFT

(11) **EP 0 617 644 B1**
(45) Veröffentlichungstag und Bekanntmachung des Hinweises auf die Patenterteilung: **26.02.1997**
(21) Anmeldenummer: 92921146.4
(22) Anmeldetag: 12.10.1992
(51) Int. Cl.: B08B 3/02, F16L 27/04

(54) **STRAHLROHR FÜR EIN HOCHDRUCKREINIGUNGSGERÄT**
BLAST NOZZLE FOR HIGH-PRESSURE CLEANING EQUIPMENT
LANCE POUR DISPOSITIF DE NETTOYAGE A HAUTE PRESSION

(30) Priorität: 20.12.1991 DE 4142198
(43) Veröffentlichungstag der Anmeldung: 05.10.1994
(73) Patentinhaber: Alfred Kärcher GmbH & Co., 71364 Winnenden (DE)
(72) Erfinder: DELLERT, Gerhard, D-7150 Backnang (DE)
(74) Vertreter: Hoeger, Stellrecht & Partner
(86) Internationale Anmeldenummer: EP9202342
(87) Internationale Veröffentlichungsnummer: WO9312894

(56) Entgegenhaltungen:
- DE-A- 3 720 241
- FR-A- 2 596 492
- US-A- 4 035 004
- US-A- 5 069 486
- Derwent's abstract, Nr. 85- 17 394/03, SU 1 094 628, publ. Woche 8503

## Beschreibung

Die Erfindung betrifft ein Strahlrohr für ein Hochdruckreinigungsgerät mit einer Hochdruckleitung und einer an diese anschließenden Auslaßdüse.

Derartige Strahlrohre werden als Vorsatzgeräte zu Hochdruckspritzpistolen oder zum Anschluß an flexible Hochdruckschläuche verwendet und dienen dazu, daß eine Bedienungsperson einen Hochdruckreinigungsstrahl in die gewünschte Richtung lenken kann, beispielsweise zur Reinigung eines Kraftfahrzeuges.

Üblicherweise sind derartige Strahlrohre als starre Rohre ausgebildet, so daß die Austrittsrichtung des Hochdruckreinigungsstrahles nur dadurch beeinflußt werden kann, daß das Strahlrohr insgesamt verschwenkt wird (DE 37 20 241 A1). Es gibt jedoch Anwendungen, beispielsweise bei der Reinigung von hinterschnittenen und zerklüfteten Flächen, bei denen es günstig wäre, bei gleicher Positionierung des Strahlrohres den Strahl in unterschiedliche Richtungen abgeben zu können.

Es ist Aufgabe der Erfindung, ein gattungsgemäßes Strahlrohr so auszubilden, daß der Hochdruckreinigungsstrahl in unterschiedlichen Richtungen abgegeben werden kann.

Diese Aufgabe wird bei einem Strahlrohr der eingangs beschriebenen Art erfindungsgemäß dadurch gelöst, daß die Hochdruckleitung als flexibler Hochdruckschlauch ausgebildet ist und eine Anzahl von konzentrisch auf dem Hochdruckschlauch aufgeschobenen Gelenkelementen trägt, daß jedes Gelenkelement an seinen Enden eine innere beziehungsweise eine äußere Kugelringfläche trägt, wobei die innere Kugelringfläche eines Gelenkelementes flächig und reibend an der äußeren Kugelringfläche des benachbarten Gelenkelementes anliegt und diese soweit umschließt, daß beide Gelenkelemente in Längsrichtung relativ zueinander fixiert, unter Überwindung der Klemmung jedoch gegeneinander verschwenkbar sind.

Ein solches Strahlrohr läßt sich von Hand verbiegen und bleibt in der dabei erreichten Position auch dann, wenn Hochdruckflüssigkeit abgegeben wird und daher relativ große Rückstoßkräfte auf das Hochdruckreinigungsrohr wirken. Durch die größere Anzahl von Gelenkelementen läßt sich der flexible Hochdruckschlauch in eine beliebige Form bringen, beispielsweise in die Form eines gleichmäßig gebogenen Bogens oder in die Form eines S, so daß es auch möglich ist, einen seitlich gegenüber dem eigentlichen Strahlrohr versetzten Strahl abzugeben.

Die Gelenkelemente werden dabei im Bereich ihrer Kugelringflächen nach Art eines Kugelgelenkes gegeneinander verschwenkt, wobei die Verschwenkung nur über einen beschränkten Bereich erfolgen kann, bei dem die beiden benachbarten Gelenkelemente ihre Überdeckung im Bereich der Kugelringflächen aufrechterhalten. Durch die in diesem Bereich auftretende Klemmung behalten benachbarte Gelenkelemente eine einmal erreichte Winkelposition bei, diese kann nur durch Aufbringen einer relativ großen Kraft wieder verändert werden, so daß der Benutzer zwar mit Kraft eine Verschwenkung der Düse gegenüber einer Zuleitung vornehmen kann, diese Positionierung aber im Betrieb dann beibehalten wird.

Gliederarme mit Gelenkelementen sind an sich aus der FR-A-2 596 492 und aus der US-A-5 069 489 bekannt, jedoch fehlt jegliche Anregung dafür, diese bei einem Strahlrohr eines Hochdruckreinigungsgerätes einzusetzen, bei dem aufgrund der hohen Drücke ganz erhebliche Rückstoßkräfte auftreten.

Bei einer bevorzugten Ausführungsform sind die Gelenkelemente hülsenförmig ausgebildet und ihre Endbereiche sind im Längsschnitt kreisförmig abgebogen. Günstig ist es, wenn die Kugelringflächen mit einer Profilierung zur Erhöhung der Klemmkräfte versehen sind, beispielsweise mittels einer Rändelung.

Es kann vorgesehen sein, daß das Gelenkelement in seinem zwischen den Kugelringflächen gelegenen Mittelteil dicht an dem Hochdruckschlauch anliegt und im Bereich der Kugelringflächen vom Hochdruckschlauch einen Abstand einhält. Es ergibt sich somit eine Führung des Hochdruckschlauches im Mittelbereich der Gelenkelemente, im Gelenkbereich jedoch läuft der Hochdruckschlauch kontaktfrei durch diesen Gelenkbereich hindurch.

Das der Düse benachbarte Gelenkelement kann die Düse oder einen starr mit dieser verbundenen Ansatzteil dicht umgeben. Dadurch wird das erste Gelenkelement in einer Reihe von Gelenkelementen hinsichtlich seiner Ausrichtung festgelegt, es behält seine Ausrichtung koaxial zur Hochdruckdüse bei, und erst das nächste und die nachfolgenden Gelenkelemente können gegenüber dem ersten Gelenkelement in eine verschwenkte Stellung gebracht werden.

Bei einem bevorzugten Ausführungsbeispiel ist der Hochdruckschlauch an seinem der Düse abgewandten Ende von einem Griffteil umgeben. Dieses ermöglicht es, das Strahlrohr zu fassen, beispielsweise, um es über einen herkömmlichen Anschluß mit einem Hochdruckreinigungsgerät oder einer zu diesem führenden Versorgungsleitung zu verbinden, außerdem wird durch ein solches Griffteil die Verformung im Bereich der Gelenkelemente unterstützt, da das Strahlrohr zum Verformen einerseits am Griffteil und andererseits an der Hochdruckdüse gefaßt und dann in die entsprechende Form gebracht werden kann.

Auch im Bereich des Griffteiles ist es günstig, wenn das dem Griffteil benachbarte Gelenkelement im Griffteil konzentrisch zum Hochdruckschlauch festgelegt ist, so daß auch in diesem Bereich erst das nächste Gelenkelement verschwenkbar ist.

Das Griffteil kann selbst ein Anschlußstück zum Anschliessen des Strahlrohres an eine Hochdruckleitung tragen.

Es ist weiterhin vorteilhaft, wenn der Hochdruckschlauch im Griffteil unverbiegbar gelagert ist, so daß der Hochdruckschlauch dadurch in seinem Anschlußbereich an die Hochdruckleitung einen mechanischen Schutz erfährt.

Bei einer besonderer Ausführungsform kann vorgesehen sein, daß die Gelenkelemente von einem flexiblen Mantel umgeben sind, der vorzugsweise ein Balgen ist. Dadurch werden die Gelenkelemente gegen Verschmutzung geschützt, außerdem wird ein Kontakt mit den unter Umständen heißen und gut wärmeleitenden Gelenkelementen verhindert.

Die nachfolgende Beschreibung bevorzugter Ausführungsformen der Erfindung dient im Zusammenhang mit der Zeichnung der näheren Erläuterung. Es zeigen:

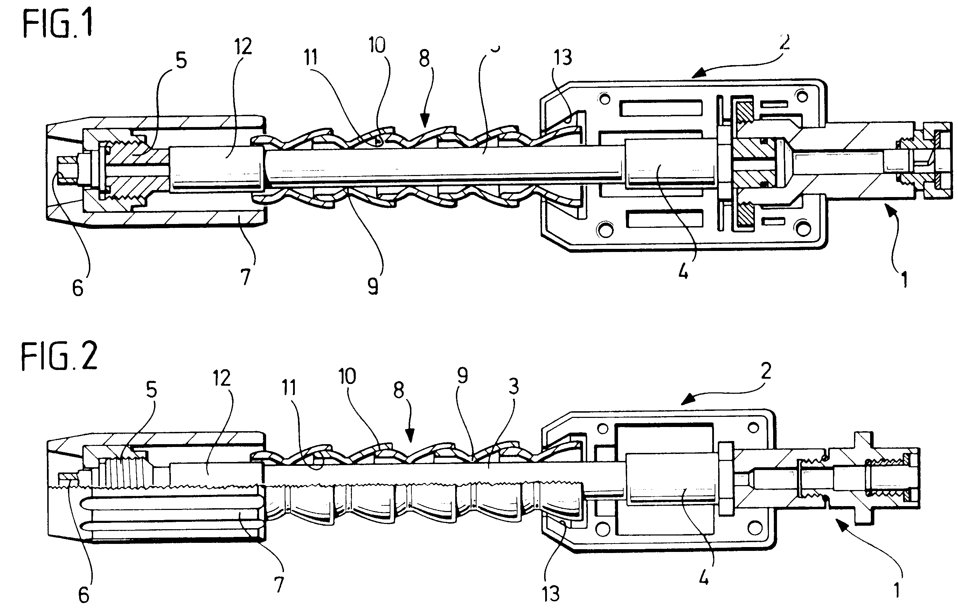

- Figur 1 :: eine Längsschnittansicht durch eine erste bevorzugte Ausführungsform eines Strahlrohres mit einem flexiblen, von Gelenkelementen umgebenen Mittelbereich;
- Figur 2 :: eine Ansicht ähnlich Figur 1 eines weiteren bevorzugten Ausführungsbeispieles eines Strahlrohres und
- Figur 3 :: eine Ansicht ähnlich Figur 1 eines weiteren bevorzugten Ausführungsbeispieles eines Strahlrohres mit einem die Gelenkelemente umgebenden, balgenförmigen Mantel.

Das in der Zeichnung dargestellte Strahlrohr ist als Vorsatzgerät für ein Hochdruckreinigungsgerät bestimmt, welches in der Zeichnung nicht eigens dargestellt ist. Ein solches Hochdruckreinigungsgerät fördert ein flüssiges Hochdruckreinigungsmedium, in der Regel Wasser, unter hohem Druck, beispielsweise mit einem Druck von 100 bar.

Diese Flüssigkeit wird über eine Hochdruckleitung abgegeben, die beispielsweise in Form eines flexiblen Hochdruckschlauches vorliegt, der mittels eines Abschlußventils abgeschlossen ist. Dieses Abschlußventil kann sich im Handgriff einer Handspritzpistole befinden. Das dargestellte Strahlrohr wird einer solchen Handspritzpistole oder der Hochdruckleitung unmittelbar vorgeschaltet und dient zur Führung des abgegebenen Hochdruckstrahls.

Es umfaßt ein Anschlußstück 1, mit dem das Hochdruckreinigungsgerät beispielsweise mittels einer Schraub- oder einer Steckverbindung mit der Hochdruckpistole dicht verbindbar ist. Dieses Anschlußstück 1 ist bei den beiden in der Zeichnung dargestellten Ausführungsbeispielen verschieden ausgebildet, wobei die Ausbildung des Anschlußstückes von der Konstruktion des Anschlusses insgesamt abhängt. Da es sich dabei um herkömmliche Techniken handelt, wird darauf hier nicht näher eingegangen.

Die Anschlußstücke 1 sind im Inneren eines Griffteiles 2 festgelegt und dort mit einem flexiblen Hochdruckschlauch 3 flüssigkeitsdicht verbunden. Dieser flexible Hochdruckschlauch weist an seinem im Griffteil 2 gelagerten Ende ein Endstück 4 auf, welches als den Hochdruckschlauch umgebende starre Hülse ausgebildet sein kann, dieses Endstück 4 ist im Griffteil 2 fest gelagert und steht dort in flüssigkeitsdichter Verbindung mit dem Anschlußstück 1.

Das Griffteil 2 umgibt den Verbindungsbereich zwischen Anschlußstück 1 und Hochdruckschlauch 3 konzentrisch und weist einen Durchmesser auf, der ein gutes Festhalten des Strahlrohres in diesem Bereich ermöglicht. Im Außenbereich kann das Griffteil 2 aus Kunststoff bestehen, so daß eine thermische und gegebenenfalls auch eine elektrische Isolierung gegenüber dem Anschlußstück 1 gegeben ist.

Der Hochdruckschlauch 3 ist im Griffteil 2 so festgelegt, daß der Hochdruckschlauch 3 im wesentlichen geradlinig aus dem Griffteil 2 herausgeführt ist.

Am gegenüberliegende Ende ist auf den Hochdruckschlauch 3 eine Hochdruckdüse 5 aufgesetzt, so daß das Innere des Hochdruckschlauches 3 in die Düsenbohrung 6 dieser Hochdruckdüse 5 einmündet. Hochdruckdüse und Ansatzteil des Hochdruckschlauches 3 sind von einer hülsenförmigen Kappe 7 überfangen.

Zwischen Griffteil 2 und Hochdruckdüse 5 wird der Hochdruckschlauch 3 von einer Vielzahl von Gelenkelementen 8 umgeben, die alle gleich ausgebildet sind. Jedes Gelenkelement 8 hat die Form einer Hülse, die in ihrem Mittelbereich 9 an der Außenwand des Hochdruckschlauches 3 anliegt, während der Durchmesser des Gelenkelementes 8 zu beiden Enden hin zunimmt.

Ausgehend vom Mittelbereich 9 ist das Gelenkelement 8 zu beiden Enden hin im Längsschnitt kreisbogenförmig gebogen, so daß an beiden Enden Kugelringflächen 10, 11 ausgebildet werden. Eine der Kugelringflächen 10 wird im folgenden als "äußere Kugelringfläche" bezeichnet, da sie sich auf dem Außenumfang des Gelenkelementes 8 befindet. Die andere Kugelringfläche 11 am gegenüberliegenden Ende wird als "innere Kugelringfläche" bezeichnet,, da sie an der Innenseite des Gelenkelementes 8 angeordnet ist. Der Innendurchmesser der inneren Kugelringfläche 11 entspricht dem äußeren Durchmesser der äußeren Kugelringfläche 10, so daß zwei benachbarte Gelenkelemente im Bereich der Kugelringflächen 10, 11 flächig aneinander anliegen und ein Kugelgelenk ausbilden. Zu diesem Zweck umgreift die innere Kugelringfläche 11 des einen Gelenkelementes die äußere Kugelringfläche 10 des benachbarten Gelenkelementes soweit, daß die Kugelringflächen ineinander einschnappen und somit benachbarte Gelenkelemente in Axialrichtung relativ zueinander festgelegt sind, während sie gegeneinander verschwenkbar bleiben.

Die Abmessungen sind dabei so gewählt, daß sich zwischen aneinanderliegenden Kugelringflächen 10, 11 eine Klemmung ergibt, das heißt hier entsteht ein Reibschluß, der nur unter Überwindung einer relativ großen Reibkraft überwunden werden kann. Diese Reibkraft kann durch geeignete Oberflächenbearbeitung im Bereich der Kugelringflächen erhöht werden, beispielsweise durch Anbringen einer Rändelung, durch Aufrauhen dieser Flächen etc.

Das der Hochdruckdüse am nächsten liegende Gelenkelement 8 umgreift mit seinem Ende ein hülsenförmiges Endstück 12 des Hochdruckschlauches 3, die Hochdruckdüse selbst oder ein fest mit dieser verbundenes Teil, so daß dieses erste Gelenkelement 8 der Reihe von Gelenkelementen relativ zur Hochdruckdüse unverschwenkbar gehalten ist.

Am gegenüberliegenden Ende der Reihe von Gelenkelementen 8 wird das letzte Gelenkelement im Inneren des Griffteiles 2 in einem dafür vorgesehenen Ringraum 13 gehalten und somit ebenfalls gegenüber der Längsachse des Griffteiles und damit der Längsachse des Amschlußstückes 1 und des Endstückes 4 festgelegt. Zwischen diesen beiden End-Gelenkelementen sind eine größere Anzahl weiterer Gelenkelemente 8 vorgesehen, die relativ zueinander nach Art eines Kugelgelenkes verschwenkbar sind, wobei die jeweilige Position durch den Reibschluß aufrechterhalten wird und nur unter Überwindung einer relativ großen Kraft geändert werden kann.

In der Zeichnung sind zwischen Griffteil und Hochdruckdüse nur wenige Gelenkelemente dargestellt, in der Praxis können auch mehr Gelenkelemente vorgesehen sein, dazu kann auch der Hochdruckschlauch 3 zwischen Griffteil und Hochdruckdüse länger ausgebildet werden.

Die Gelenkelemente 8 können aus Kunststoff bestehen, es sind jedoch auch Gelenkelemente aus Metall denkbar, beispielsweise aus Messing oder aus Edelstahl.

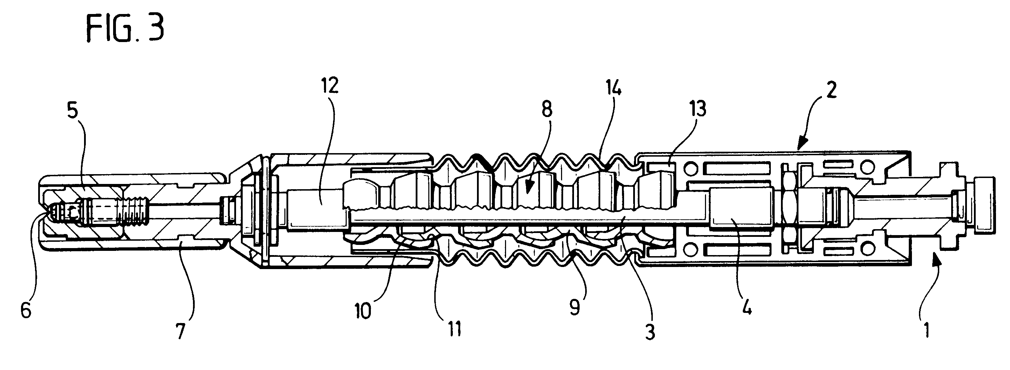

Die Gelenkelemente 8 des Ausführungsbeispiels der Figur 3 sind außen von einem balgenförmigen Mantel umgeben, der sich zwischen dem Griffteil 2 und der Kappe 7 erstreckt und die Gelenkelemente 8 über ihre gesamte Länge im Abstand schützend umgibt. Dadurch wird sichergestellt, daß beispielsweise aus Messing oder Edelstahl bestehende Gelenkelemente auch dann, wenn sie aufgrund der transportierten Flüssigkeit heiß sind, nicht zu Verbrennungen bei der Bedienungsperson führen. Außerdem werden die Gelenkelemente auf diese Weise gegen Verschmutzung geschützt, so daß die Beweglichkeit erhalten bleibt.

Zur Montage des Strahlrohres werden mehrere Gelenkelemente 8 ineinandergesteckt, wobei jeweils äußere Kugelringflächen 10 innere Kugelringflächen 11 des benachbarten Gelenkteils umfassen. Die auf diese Weise gebildete Gliederkette wird auf einen Hochdruckschlauch 3 aufgeschoben und erst anschließend wird der Hochdruckschlauch 3 mit der Hochdruckdüse 5 und mit dem Griffteil 2 verbunden. Das Griffteil 2 kann zu diesem Zweck aus zwei Halbschalen bestehen, die mittels Schrauben oder dergleichen miteinander verbunden sind.

Durch Anfassen des Strahlrohres einerseits am Griffteil 2 und andererseits an der die Hochdruckdüse 5 überfangenden Kappe 7 können diese beiden Teile relativ zueinander in ihrer Position geändert werden, das heißt man erhält auf diese Weise beispielsweise einen gebogenen Hochdruckschlauch 3 oder einen abgekröpften Verlauf des Hochdruckschlauches, so daß die Richtung des aus der Hochdruckdüse 5 austretenden Reinigungsstrahles gegenüber der Richtung des Anschlußstückes 1 eingestellt werden kann. Die einmal eingestellte Richtung wird aufgrund der Klemmkräfte zwischen benachbarten Gelenkelementen beibehalten.

## Patentansprüche

1. Strahlrohr für ein Hochdruckreinigungsgerät mit einer Hochdruckleitung (3) und einer an diese anschließenden Auslaßdüse (5),
dadurch gekennzeichnet, daß die Hochdruckleitung als flexibler Hochdruckschlauch (3) ausgebildet ist und eine Anzahl von konzentrisch auf den Hochdruckschlauch (3) aufgeschobenen Gelenkelementen (8) trägt, daß jedes Gelenkelement (8) an seinen beiden Enden eine innere beziehungsweise eine äußere Kugelringfläche (11 beziehungsweise 10) trägt, wobei die innere Kugelringfläche (11) eines Gelenkelementes (8) flächig und reibend an der äußeren Kugelringfläche (10) des benachbarten Gelenkelementes (8) anliegt und diese soweit umschließt, daß beide Gelenkelemente (8) in Längsrichtung relativ zueinander fixiert, unter Überwindung der Klemmung jedoch gegeneinander verschwenkbar sind.

2. Strahlrohr nach Anspruch 1, dadurch gekennzeichnet, daß die Gelenkelemente (8) hülsenförmig ausgebildet sind und ihre Endbereiche im Längsschnitt kreisförmig abgebogen sind.

3. Strahlrohr nach Anspruch 1 oder 2, dadurch gekennzeichnet, daß die Kugelringflächen (10, 11) mit einer Profilierung zur Erhöhung der Klemmkräfte versehen sind.

4. Strahlrohr nach Anspruch 3, dadurch gekennzeichnet, daß die Profilierung eine Rändelung ist.

5. Strahlrohr nach einem der voranstehenden Ansprüche, dadurch gekennzeichnet, daß das Gelenkelement (8) in seinem zwischen den Kugelringflächen (10, 11) gelegenen Mittelteil (9) dicht an dem Hochdruckschlauch (3) anliegt und im Bereich der Kugelringflächen (10, 11) vom Hochdruckschlauch (3) einen Abstand einhält.

6. Strahlrohr nach einem der voranstehenden Ansprüche, dadurch gekennzeichnet, daß das der Düse (5) benachbarte Gelenkelement (8) die Düse (5) oder einen starr mit dieser verbundenen Ansatzteil dicht umgibt.

7. Strahlrohr nach einem der voranstehenden Ansprüche, dadurch gekennzeichnet, daß der Hochdruckschlauch (3) an seinem der Düse (5) abgewandten Ende von einem Griffteil (2) umgeben ist.

8. Strahlrohr nach Anspruch 7, dadurch gekennzeichnet, daß das dem Griffteil (2) benachbarte Gelenkelement (8) im Griffteil (2) konzentrisch zum Hochdruckschlauch (3) festgelegt ist.

9. Strahlrohr nach Anspruch 7 oder 8, dadurch gekennzeichnet, daß das Griffteil (2) ein Anschlußstück (1) zum Anschließen des Strahlrohres an eine Hochdruckleitung trägt.

10. Strahlrohr nach einem der Ansprüche 7 bis 9, dadurch gekennzeichnet, daß der Hochdruckschlauch (3) im Griffteil (2) unverbiegbar gelagert ist.

11. Strahlrohr nach einem der voranstehenden Ansprüche, dadurch gekennzeichnet, daß die Gelenkelemente (8) von einem flexiblen Mantel (14) umgeben sind.

12. Strahlrohr nach Anspruch 11, dadurch gekennzeichnet, daß der Mantel (14) ein Balgen ist.

## Claims

1. A jet pipe for a high-pressure cleaning appliance with a high-pressure line (3) and a discharge nozzle (5) attached thereto, **characterized in that** the high-pressure line is in the form of a flexible high-pressure hose (3) and carries a plurality of articulated members (8) pressed concentrically onto the high-pressure hose (3), each articulated member (8) is provided at its two ends with an inner and an outer ball-race surface (11 and 10 respectively), wherein the inner ball-race surface (11) of an articulated member (8) rests flat and with friction on the outer ball-race surface (10) of the adjacent articulated member (8) and surrounds it to such an extent that the two articulated members (8) are fixed relative to each other in the longitudinal direction, but are pivotable with respect to each other while overcoming the clamping action.

2. A jet pipe according to Claim 1, **characterized in that** the articulated members (8) are constructed in the form of a sleeve, and their end regions are bent over in a circular shape in longitudinal section.

3. A jet pipe according to Claim 1 or 2, **characterized in that** the ball-race surfaces (10, 11) are provided with a profiling in order to increase the clamping forces.

4. A jet pipe according to Claim 3, **characterized in that** the profiling is a knurled portion.

5. A jet pipe according to one of the preceding Claims, **characterized in that** the articulated member (8) rests closely against the high-pressure hose (3) in its middle portion (9) situated between the ball-race surfaces (10, 11) and is at a distance from the high-pressure hose (3) in the region of the ball-race surfaces (10, 11).

6. A jet pipe according to one of the preceding Claims, **characterized in that** the articulated member (8) adjacent to the nozzle (5) closely surrounds the nozzle (5) or an attachment part rigidly connected thereto.

7. A jet pipe according to one of the preceding Claims, **characterized in that** the high-pressure hose (3) is surrounded by a handle part (2) at its end remote from the nozzle (5).

8. A jet pipe according to Claim 7, **characterized in that** the articulated member (8) adjacent to the handle part (2) is secured in the handle part (2) concentrically to the high-pressure hose (3).

9. A jet pipe according to Claim 7 or 8, **characterized in that** the handle part (2) carries an attachment piece (1) for attaching the jet pipe to a high-pressure line.

10. A jet pipe according to one of Claims 7 to 9, **characterized in that** the high-pressure hose (3) is mounted in the handle part (2) in an inflexible manner.

11. A jet pipe according to one of the preceding Claims, **characterized in that** the articulated members (8) are surrounded by a flexible jacket (14).

12. A jet pipe according to Claim 11, **characterized in that** the jacket (14) is a bellows.

## Revendications

1. Lance pour un appareil de nettoyage à haute pression, comportant une conduite à haute pression (3) et une buse de sortie (5) qui s'y raccorde, caractérisée en ce que la conduite à haute pression est réalisée sous forme d'un tuyau à haute pression flexible (3) et porte un certain nombre d'éléments d'articulation (8) enfilés concentriquement sur le tuyau à haute pression (3), en ce que chaque élément d'articulation (8) porte à ses deux extrémités une surface annulaire sphérique intérieure ou extérieure (11 ou 10), la surface annulaire sphérique intérieure (11) d'un élément d'articulation (8) s'appuyant en surface et avec friction contre la surface annulaire sphérique extérieure (10) de l'élément d'articulation voisin (8) et entourant celle-ci aussi loin que les deux éléments d'articulation (8) sont fixés l'un par rapport à l'autre en direction longitudinale, mais susceptibles de basculer l'un par rapport à l'autre en surmontant le coincement.

2. Lance selon la revendication 1, caractérisée en ce que les éléments d'articulation (8) sont réalisés en forme de douilles, et leurs régions d'extrémités sont incurvées en forme de cercle, en coupe longitudinale.

3. Lance selon l'une ou l'autre des revendications 1 et 2, caractérisée en ce que les surfaces annulaires sphériques (10, 11) sont pourvues d'un profilage pour augmenter les forces de coincement.

4. Lance selon la revendication 3, caractérisée en ce que le profilage est un moletage.

5. Lance selon l'une quelconque des revendications précédentes, caractérisée en ce que l'élément d'articulation (8) s'appuie par sa partie médiane (9) située entre les surfaces annulaires sphériques (10, 11) de façon étanche contre le tuyau à haute pression (3), et en ce qu'il maintient une distance vis-à-vis du tuyau à haute pression (3) dans la région des surfaces annulaires sphériques (10, 11).

6. Lance selon l'une quelconque des revendications précédentes, caractérisée en ce que l'élément d'articulation (8) voisin de la buse (5) entoure de façon étanche la buse (5) ou une pièce de raccordement rigidement reliée à celle-ci.

7. Lance selon l'une quelconque des revendications précédentes, caractérisée en ce que le tuyau à haute pression (3) est entouré, à son extrémité détournée de la buse (5), par une partie de poignée (2).

8. Lance selon la revendication 7, caractérisée en ce que l'élément d'articulation (8) voisin de la partie de poignée (2) est fixé dans la partie de poignée (2) concentriquement au tuyau à haute pression (3).

9. Lance selon l'une ou l'autre des revendications 7 et 8, caractérisée en ce que la partie de poignée (2) porte une pièce de raccordement (1) pour raccorder la lance à une conduite à haute pression.

10. Lance selon l'une quelconque des revendications 7 à 9, caractérisée en ce que le tuyau à haute pression (3) est monté de manière à ne pas fléchir dans la partie de poignée (2).

11. Lance selon l'une quelconque des revendications précédentes, caractérisée en ce que les éléments d'articulation (8) sont entourés par un manteau flexible (14).

12. Lance selon la revendication 11, caractérisée en ce que le manteau (14) est un soufflet.
